# EUROPÄISCHE PATENTSCHRIFT

(11) **EP 0 578 940 B1**
(45) Veröffentlichungstag und Bekanntmachung des Hinweises auf die Patenterteilung: **08.04.1998**
(21) Anmeldenummer: 93107452.0
(22) Anmeldetag: 07.05.1993
(51) Int. Cl.: C08G 18/66, C08G 18/42, C08G 18/12, C09D 175/06, C09K 3/10

(54) **Wasserdispergierbare Polyurethanpolyole und ihre Verwendung in Bindemitteln**
Water dispersible polyurethane polyols and their use in binding agents
Polyuréthane polyols dispersibles dans l'eau et leur utilisation dans des liants

(30) Priorität: 19.05.1992 DE 4216536
(43) Veröffentlichungstag der Anmeldung: 19.01.1994
(73) Patentinhaber: BAYER AG, 51368 Leverkusen (DE)
(72) Erfinder: Blum, Harald, Dr., W-4175 Wachtendonk 2 (DE); Kahl, Lothar, Dr., W-5060 Bergisch Gladbach 2 (DE); Yuva, Nusret, W-5653 Leichlingen 1 (DE); Bock, Manfred, Dr., W-5090 Leverkusen 1 (DE)

(56) Entgegenhaltungen:
- EP-A- 0 365 902
- EP-A- 0 427 028
- EP-A- 0 427 979
- DE-B- 1 022 790

## Beschreibung

Die Erfindung betrifft neue, wasserverdünnbare, Urethan- und Carbonatgruppen aufweisende Polyesterpolyole, ein Verfahren zu ihrer Herstellung, wasserverdünnbare Bindemittelkombinationen auf Basis dieser Polyesterpolyole und die Verwendung der Polyesterpolyole als Bindemittelkomponente in wäßrigen Beschichtungsmitteln und Dichtmassen.

Moderne wäßrige Bindemittel sind in der Lage, in vielen Anwendungen organisch gelöste Bindemittel zu substituieren. Dies gilt vor allem für solche Bereiche, in denen wäßrige Bindemittel spezifische Vorteile aufweisen können, wie z.B. in der Elektrotauchlackierung.

Für Anwendungen mit sehr hohem Anforderungsprofil, wie z.B. dem Klarlack im Automobillackaufbau, fehlen bis jetzt überzeugende, wäßrige Bindemittel, die den gestellten Anforderungen gerecht werden. In der EP-A-0 455 028 werden z.B. Emulsionscopolymerisate beschrieben, die in Kombination mit Melaminharzen Automobilklarlacke ergeben, die bereits ein ordentliches Eigenschaftsniveau aufweisen, jedoch in den Filmoptischen Eigenschaften wie Glanz und Verlauf verbesserungsbedürftig sind.

Neben den z.B. für Automobilklarlacke unverzichtbaren, sehr guten filmoptischen Eigenschaften, rücken in zunehmendem Maße auch Forderungen nach hoher Chemikalien- und Lösemittel- bzw. Superbenzinfestigkeit in den Vordergrund. Damit soll sichergestellt werden, daß Lackschichten auch bei fortschreitender Umweltbelastung ihre schützende und werterhaltende Funktion möglichst lange beibehalten. Darüber hinaus sollen moderne, wäßrige Bindemittel möglichst wenig organische Hilfslösemittel enthalten, um auch strengen Maßstäben bezüglich Umweltverträglichkeit gerecht zu werden.

Aus D 1 ist bekannt, Polyurethanpolyharnstoff-Dispersionen in Kombination mit Aluminiumpigmenten in wäßrigen Metallic-Basis-Lacken einzusetzen. Die dort beschriebenen Dispersionen zeichnen sich durch gute Schwitzwasserbeständigkeit und gute Haftung aus. Hinweise, daß solche Dispersionen für Automobilklarlacke, an die hohe Anforderungen z. B. bezüglich Filmoptik, Lösemittel- und Chemikalienbeständigkeit und Filmmechanik gestellt werden, geeignet sind, werden in D 1 nicht gegeben.

Es war die der Erfindung zugrundeliegende Aufgabe, wäßrige Bindemittel zur Verfügung zu stellen, die für Anwendungen mit hohem Anforderungsprofil, wie z.B. für Automobilklarlacke, geeignet sind und dabei insbesondere sehr gute filmoptische Eigenschaften mit guter Chemikalien- und Lösemittelbeständigkeit vereinen, darüber hinaus wirtschaftlich herstellbar sind und möglichst wenige flüchtige, organische Substanzen enthalten.

Wie jetzt gefunden wurde, entsprechen die nachstehend näher beschriebenen erfindungsgemäßen, Urethan- und Carbonatsegmente enthaltenden, wasserverdünnbaren Polyesterpolyole den genannten Forderungen der Praxis. Die erfindungsgemäßen Polyesterpolyole sind nicht nur mit Wasser sondern auch mit den übrigen Lackkomponenten sehr gut verträglich, enthalten wenig flüchtige, organische Substanzen und können in Kombination mit den üblichen Vernetzerharzen zu hochwertigen, lagerstabilen, wäßrigen Beschichtungsmitteln und Dichtmassen verarbeitet werden.

Gegenstand der Erfindung sind wasserverdünnbare, Urethangruppen aufweisende Polyesterpolyole, dadurch gekennzeichnet, daß sie zu 25 bis 100 % mit Basen neutralisierte, einer Säurezahl von 6 bis 45 mg KOH/g entsprechende Säuregruppen, eine Hydroxylzahl von 20 bis 250 mg KOH/g, ein Molekulargewicht Mw von 2 000 bis 150 000 und einen Urethangruppengehalt (-NH-CO-O-) von 2 bis 16 Gew.-% aufweisen und zumindest teilweise neutralisierte Umsetzungsprodukte darstellen von
a) 35 bis 90 Gew.-% eines verzweigten Polyesterpolyols mit einer Hydroxylzahl von 40 bis 600,
b) insgesamt 0,5 bis 8,5 Gew.-% mindestens einer Hydroxycarbonsäure,
c) insgesamt 0 bis 15 Gew.-% mindestens einer mindestens eine OH- und/oder NH- und/oder NH₂-Gruppe enthaltenden Verbindungen des Molekulargewichts 32 bis 500,
d) insgesamt 3 bis 33 Gew.-% mindestens einer mindestens difunktionellen Isocyanatkomponente des Molekulargewichts 168 bis 2 000 und
e) 0 bis 45 Gew.-% eines hydroxyfunktionellen Polycarbonats des Molekulargewichts 450 bis 16 000,
wobei das verzweigte Polyesterpolyol a) ein Kondensationsprodukt ist, aus
a₁) 0 bis 60 Gew.-% Monocarbonsäuren mit 6 bis 22 Kohlenstoffatomen,
a₂) 6 bis 65 Gew.-% Di- undloder Tricarbonsäuren bzw. deren Anhydriden,
a₃) 10 bis 70 Gew.-% di- undloder höherfunktionellen Alkoholen,
a₄) 0 bis 35 Gew.-% Monoalkoholen,
a₅) 0 bis 30 Gew.-% Hydroxycarbonsäuren, Aminocarbonsäuren, Lactonen, Lactamen und/oder Aminoalkoholen und
a₆) 0 bis 45 Gew.-% eines hydroxyfunktionellen Polycarbonats des Molekulargewichts 450 bis 16 000,
wobei sich die Prozentangaben zu a) bis e) sowie zu a₁) bis a₆) jeweils zu 100 % ergänzen,
mit der Maßgabe, daß die Polyole 1 bis 25 Gew.-% Carbonatgruppen (-O-CO-O-) in über die Aufbaukomponenten e) und/oder a₆) eingebauter Form enthalten.

Gegenstand der Erfindung ist auch ein Verfahren zur Herstellung dieser Polyesterpolyole, welches dadurch gekennzeichnet ist, daß man durch eine Polykondensationsreaktion aus den Komponenten a₁) bis a₆) einen gegebenenfalls Polycarbonatsegmente enthaltenden Polyester a) herstellt, diesen dann gegebenenfalls in einem organischen Lösemittel mit der Hydroxycarbonsäure b), gegebenenfalls einer Komponente c), der Isocyanatkomponente d) und gegebenenfalls der Polycarbonatkomponente e), gegebenenfalls unter Mitverwendung geeigneter Urethanisierungskatalysatoren so umsetzt, daß keine freien NCO-Gruppen mehr nachweisbar sind, anschließend ein Neutralisationsmittel hinzufügt, gleichzeitig oder anschließend in Wasser löst bzw. dispergiert und dann gegebenenfalls Lösemittel teilweise oder ganz destillativ entfernt, wobei über die Komponente a₆) und/oder die Komponente e) Polycarbonatsegmente in das Polymer in einer solchen Menge eingebaut werden, die einem Gehalt an Carbonatgruppen -O-CO-O- von 1 bis 25 Gew.-% entsprechen.

Gegenstand der Erfindung sind auch wasserverdünnbare Bindemittelkombinationen, die dadurch gekennzeichnet sind, daß sie
A) 30 bis 98 Gew.-% an erfindungsgemäßen Polyesterpolyolen und
B) 2 bis 70 Gew.-% mindestens eines Vernetzerharzes
enthalten, wobei sich die Prozentangaben auf den Gesamtfestkörpergehalt A) und B) beziehen.

Gegenstand der Erfindung ist schließlich auch die Verwendung der erfindungsgemäßen Polyesterpolyole, gegebenenfalls in Kombination mit anderen Hydroxylgruppen aufweisenden Lackharzen als Bindemittelkomponente in, gegebenenfalls die üblichen Hilfs-und Zusatzstoffe der Lacktechnologie enthaltenden, Beschichtungsmitteln oder Dichtmassen.

Bei den erfindungsgemäßen Polyesterpolyolen handelt es sich um Polymere, die neben alkoholischen Hydroxylgruppen Ester-, Carbonat-, Urethan- sowie salzartige und gegebenenfalls freie Säuregruppen aufweisen. Das durch Gelpermeationschromatographie unter Verwendung von geeichtem Polystyrol als Standard ermittelte Molekulargewicht Mw liegt bei 2 000 bis 150 000, vorzugsweise 3 500 bis 70 000. Der Gehalt an Estergruppen (= Carbonsäureestergruppen) -CO-O liegt im allgemeinen bei 3,5 bis 45, vorzugsweise bei 7,5 bis 30 Gew.-%. Der Gehalt an Urethangruppen -NH-CO-O- liegt bei 2 bis 16, vorzugsweise 3,5 bis 13,5 Gew.-% und der Gehalt an Carbonatgruppen -O-CO-O- liegt bei 1 bis 25, vorzugsweise bei 2,0 bis 16,0 Gew.-%. Die Säurezahl der Polyesterpolyole, die sich sowohl auf freie Säuregruppen als auch auf mit Basen neutralisierter Säuregruppen (Sulfonsäuregruppen und insbesondere Carboxylgruppen) bezieht, liegt bei 6 bis 45, vorzugsweise 9 bis 35 mg KOH/g, während die Hydroxylzahl im Bereich von 20 bis 250, vorzugsweise von 35 bis 220 mg KOH/g liegt. Die angebauten Säuregruppen liegen in den erfindungsgemäßen Polyesterpolyolen zu 25 bis 100 % in mit Basen neutralisierter Form vor.

Diese salzartigen Gruppen (insbesondere Carboxylatgruppen) sind insbesondere für die Wasserverdünnbarkeit der erfindungsgemäßen Polyesterpolyole verantwortlich.

In der Praxis werden die erfindungsgemäßen Polyesterpolyole im allgemeinen in Form von wäßrigen Dispersionen mit einem Festkörpergehalt von 15 bis 65, vorzugsweise 25 bis 55 Gew.-% eingesetzt, die bei 23°C im allgemeinen eine Viskosität von 10 bis 25 000, vorzugsweise von 50 bis 8 000 mPa,s und einen pH-Wert von 5 bis 10, vorzugsweise von 6,5 bis 9,5 aufweisen. Der Begriff "Dispersion" soll hier und im folgenden sowohl echte wäßrige Dispersionen als auch wäßrige Lösungen umfassen. Die Frage, ob es sich um Dispersionen oder Lösungen handelt, ist insbesondere vom Gehalt an salzartigen Gruppen und vom Molekulargewicht der erfindungsgemäßen Polyesterpolyole abhängig.

Die Herstellung der erfindungsgemäßen Polyesterpolyole erfolgt nach dem Prinzip des bereits oben skizzierten erfindungsgemäßen Verfahren. Vorzugsweise erfolgt die Herstellung der erfindungsgemäßen Polyesterpolyole und ihre Überführung in eine wäßrige Dispersion durch eine Umsetzung von
a) 35 bis 90, vorzugsweise 41 bis 86 Gew.-% eines verzweigten Polyesterpolyols mit einer Hydroxylzahl von 40 bis 600, vorzugsweise von 50 bis 450 mg KOH/g Substanz,
b) insgesamt 0,5 bis 8,5 mindestens einer Hydroxycarbonsäure, vorzugsweise 1,5 bis 7,0 Gew.-% einer 2,2-Bis(hydroxymethyl)alkancarbonsäure,
c) insgesamt 0 bis 15, vorzugsweise 0 bis 10 Gew.-% mindestens einer mindestens eine OH- undloder NH-und/oder NH₂-Gruppe, vorzugsweise 1 bis 4 OH-Gruppen enthaltenden Verbindung des Molekulargewichts 32 bis 500,
d) insgesamt 3 bis 33 Gew.-%, vorzugsweise 5 bis 26 Gew.-% mindestens einer mindestens difunktionellen Isocyanatkomponente des Molekulargewichts 168 bis 2 000 und
e) 0 bis 45, vorzugsweise 5 bis 40 Gew.-% eines hydroxyfunktionellen Polycarbonats des Molekulargewichts 450 bis 16 000,
wobei sich die zu a) bis e) gemachten Prozentangaben zu 100 % ergänzen, in 40- bis 100 %iger organischer Lösung, wobei die Komponenten a), b), c), e) gegebenenfalls in einem organischen Lösemittel gelöst vorgelegt und in Gegenwart von 0 bis 2,5, vorzugsweise 0,01 bis 0,5 Gew.-% geeigneter Katalysatoren bei 40 bis 140°C mit Komponente d) derart zur Reaktion gebracht werden, daß nach der Umsetzung praktisch keine freien NCO-Gruppen mehr nachweisbar sind und dann das Reaktionsgemisch in Wasser dispergiert oder gelöst wird, wobei die in das Reaktionsprodukt eingeführten Säuregruppen während der Umsetzung oder vor bzw. während des Dispergierschrittes durch Zugabe eines Neutralisationsmittels zu 25 bis 100, vorzugsweise zu 45 bis 100 % in Salzgruppen überführt werden.

Bei der Aufbaukomponente a) handelt es sich um verzweigte Polyesterpolyole mit den oben genannten Kenndaten. Der Begriff "verzweigt" soll hierbei bedeuten, daß die Polyesterpolyole im statistischen Mittel pro Molekül 0,7, vorzugsweise mindestens eine Verzweigungsstelle aufweisen.

Die Herstellung der verzweigten Polyesterpolyole a) erfolgt durch Polykondensation von
a₁) 0 bis 60, vorzugsweise 0 bis 55 Gew.-% Monocarbonsäuren mit 6 bis 22, vorzugsweise 7 bis 18 Kohlenstoffatomen,
a₂) 6 bis 65, vorzugsweise 11 bis 58 Gew.-% Di- und/ oder Tricarbonsäuren bzw. deren Anhydriden,
a₃) 10 bis 70, vorzugsweise 17 bis 63 Gew.-% di- und/ oder höherfunktionellen Alkoholen,
a₄) 0 bis 35, vorzugsweise 0 bis 15 Gew.-% Monoalkoholen,
a₅) 0 bis 30, vorzugsweise 0 bis 20 Gew.-% Hydroxycarbonsäuren, Aminocarbonsäuren, Lactonen, Lactamen und/oder Aminoalkoholen und
a₆) 0 bis 45, vorzugsweise 5 bis 40 Gew.-% eines hydroxyfunktionellen Polycarbonats des Molekulargewichts 450 bis 16 000, vorzugsweise 750 bis 6000,
wobei sich die Prozentangaben zu a₁) bis a₆) zu 100 % ergänzen und wobei die Umsetzung gegebenenfalls unter Zuhilfenahme üblicher Veresterungskatalysatoren vorzugsweise nach dem Prinzip einer Schmelz- oder Azeotropkondensation bei Temperaturen von 140 bis 240°C erfolgt. Tri- und höherfunktionelle Aufbaukomponenten [insbesondere a₂) und/oder a₃)] müssen auf jeden Fall in solchen Mengen mitverwendet werden, daß die obengenannte Bedingung bezüglich des Verzweigungsgrades erfüllt ist. Im allgemeinen liegt der Anteil an tri- undloder höherfunktionellen Aufbaukomponenten a₂) und/oder a₃) bei mindestens 8, vorzugsweise mindestens 13 Gew.-%, bezogen auf das Gesamtgewicht der Ausgangskomponenten a₁) bis a₆).

Bei der Ausgangskomponente a₁) handelt es sich um eine Monocarbonsäurekomponente, die zumindest aus einer Monocarbonsäure des Molekulargewichtsbereichs von 112 bis 340 besteht. Geeignete Monocarbonsäuren sind z.B. Benzoesäure, tert.-Butylbenzoesäure, Hexahydrobenzoesäure, gesättigte Fettsäuren wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure, ungesättigte Fettsäuren, wie z.B. Sojaölfettsäure, Ricinusölfettsäure, Sorbinsäure, Erdnußölfettsäure, Konjuenfettsäure, Tallölfettsäure, Safflorölfettsäure sowie Gemische dieser oder anderer Monocarbonsäuren.

Bei der Ausgangskomponente a₂) handelt es sich um Di- und/oder Tricarbonsäuren bzw. deren Anhydride des Molekulargewichtsbereichs 98 bis 600. Geeignet sind z.B. Phthalsäure(anhydrid), Isophthalsäure, Terephthalsäure, Tetrahydrophthalsäure(anhydrid), (anhydrid), Hexahydrophthalsäure(anhydrid), Maleinsäure(anhydrid), Bernsteinsäure(anhydrid), Fumarsäure, Adipinsäure, Sebacinsäure, Azelainsäure, Dimerfettsäuren, Trimerfettsäure, Trimellithsäure(anhydrid) und Gemische dieser oder anderer Säuren.

Bei der Ausgangskomponente a₃) handelt es sich um Diole, Triole, Tetraole bzw. höherwertige Alkoholkomponenten des Molekulargewichtsbereichs 62 bis 400. Geeignet sind z.B. Ethylenglykol, 1,2- und 1,3-Propylenglykol, 1,3-, 1,4-, 2,3-Butandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, Tricyclodecandiol, 1,4-Butendiol, Trimethylpropan, Glycerin, Pentaerythrit, Trimethylpentandiol, Dipentaerythrit, Ditrimethylolpropan und Gemische dieser oder anderer mehrwertiger Alkohole.

Bei der Ausgangskomponente a₄) handelt es sich um Monoalkohole des Molekulargewichtsbereichs 100 bis 290, wie z.B. n-Hexanol, Cyclohexanol, Decanol, Dodecanol, Tetra.decanol, Octanol, Octadecanol, natürliche Fettalkoholgemische, wie z.B. Ocenol 110/130^{R} (Fa. Henkel) und Gemische dieser und anderer Alkohole.

Bei der Ausgangskomponente a₅) handelt es sich um Aufbaukomponenten, die im Sinne einer Polyadditions- oder Polykondensationsreaktion unter Bildung von Ester- und/oder Amidgruppen mindestens difunktionell sind und ein Molekulargewicht von 61 bis 350 aufweisen. Geeignet sind beispielsweise Hydroxycarbonsäuren, Lactone, Lactame, Aminoalkohole und/oder Aminocarbonsäuren, wie z.B. Dimethylolpropionsäure, Milchsäure, Apfelsäure, Weinsäure, ε-Caprolacton, Aminoethanol, Aminopropanol, Diethanolamin, Aminoessigsäure, Aminohexansäure oder ε-Caprolactam.

Bei der Verbindung a₆) handelt es sich um Polycarbonate, die mindestens eine, vorzugsweise zwei Hydroxylgruppen enthalten, Solche Polycarbonate werden z.B, erhalten, indem Kohlensäurederivate, wie z.B. Diphenylcarbonat oder Phosgen mit Alkoholen, vorzugsweise Diolen umgesetzt werden. Geeignete Diole sind z.B. Ethylenglykol, Propandiol, Butandiol, Hexandiol, Neopentylglykol, Di-, Tri-, Tetraethylenglykol, Dipropylenglykol, 1,4-Cyclohexandimethanol, TCD-Diol, Bisphenol A. Ebenfalls geeignet sind Gemische dieser und auch anderer Diole, die auch Anteile an Monoalkoholen, wie Ethanol, Butanol, Hexanol, Stearylalkohol, Fettalkohole (z.B. Ocenol 110/130^{R}, Fa. Henkel), Tri- und Tetraalkohole, wie z.B. Glycerin, Trimethylolpropan, Pentaerythrit oder höherfunktionelle, niedermolekulare Alkohole, wie z.B. Sorbit enthalten können, Ebenfalls geeignet zur Herstellung von Polycarbonaten sind z.B. hydroxyfunktionelle Umsetzungsprodukte der genannten Alkohole, z.B. mit Ethylenoxid, Propylenoxid und ε-Caprolacton. Das Molekulargewicht der hydroxyfunktionellen Polycarbonate liegt bei 450 bis 6 000, vorzugsweise bei 750 bis 4 000.

Bevorzugte Polyesterpolyole a) enthalten
a₁) 0 bis 55 Gew.-% Monocarbonsäuren mit 7 bis 18 Kohlenstoffatomen wie Benzoesäure, 2-Ethylhexansäure, Isononansäure, hydrierte technische Fettsäuren bzw. deren Gemische (wie z.B. Prifrac 2950®, Prifrac 2960®, Prifrac 2980® von Unichema International), Stearinsäure, Palmitinsäure, Erdnußölfettsäure, Sojaölfettsäure, Sonnenblumenfettsäure, Ölsäure und/oder Leinölfettsäure;
a₂) 11 bis 58 Gew.-% Di- und/oder Tricarbonsäure bzw. deren Anhydride wie beispielsweise Phthalsäureanhydrid, Hexahydrophthalsäureanhydrid, Isophthalsäure, Maleinsäureanhydrid, Terephthalsäure, Fumarsäure, Adipinsäure, Benzoltricarbonsäure und/oder Dimerfettsäure;
a₃) 17 bis 63 Gew.-% di- und/oder höherfunktionelle Alkohole, wie z.B. Ethylenglykol, 1,2-Propylenglykol, 1,6-Hexandiol, 1,4-Cyclohexandimethanol, Neopentylglykol, Trimethylolpropan, Glycerin und/oder Pentaerythrit, sowie
a₆) 0 bis 45 Gew.-% hydroxyfunktionelle Polycarbonate auf Basis von Umsetzungsprodukten von Kohlensäure(derivaten) und Diolen mit dem Molekulargewicht 750 bis 6 000.

Im Falle einer azeotropen Veresterung wird das Schleppmittel, üblicherweise Isooctan, Xylol, Toluol oder Cyclohexan nach beendeter Reaktion im Vakuum abdestilliert.

Bei der Komponente b) handelt es sich um mindestens eine Hydroxycarbonsäure, vorzugsweise um 2,2-Bis-(hydroxymethyl)-alkancarbonsäuren mit insgesamt mindestens 5 Kohlenstoffatomen, wie z.B. 2,2-Bis(hydroxymethyl)-propionsäure (Dimethylolpropionsäure).

Bei der Komponente c) handelt es sich um mindestens eine OH-, NH- und/oder NH₂-Gruppe, vorzugsweise 1 bis 4 OH-Gruppen enthaltende Verbindungen des Molekulargewichts 32 bis 500, wie z.B. Ethanol, Methoxypropanol, Butylglykol, Cyclohexanol, Ethylenglykol, 1,6-Hexandiol, Neopentylglykol, 1,4-Cyclohexandimethanol, Trimethylolpropan, Glycerin, Pentaerythrit. Ebenfalls geeignet, jedoch weniger bevorzugt, sind z.B. Aminoethanol, Aminoisopropanol, Diethanolamin, Diisopropanolamin, Stearylamin, N,N'-Dimethyl-1,3-aminopropan. Ebenfalls geeignet sind Mischungen der genannten und auch anderer Verbindungen.

Die Isocyanatkomponente d) besteht aus mindestens einem organischen Polyisocyanat des Molekulargewichtsbereichs 168 bis 2 000. Geeignet sind beispielsweise Hexamethylendiisocyanat, Perhydro-2,4 und 4,4'-diphenylmethandiisocyanat, Isophorondiisocyanat, Toluylendiisocyanat, Naphthalindiisocyanat und andere Isocyanate, wie sie z.B. in "Methoden der organischen Chemie" (Houben-Weyl, Bd. 14/2, 4. Auflage, Georg Thieme Verlag Stuttgart 1963, S. 61 bis 70) beschrieben werden.

Ebenfalls geeignet sind z.B. Lackpolyisocyanate auf Hexamethylendiisocyanat-, Isophorondiisocyanat-, Diphenylmethandiisocyanat und Toluylendiisocyanatbasis, die z.B. Urethangruppen, Uretdiongruppen, Isocyanurat- und/oder Biuretgruppen aufweisen.

Vorzugsweise eingesetzt werden Hexamethylendiisocyanat, Isophorondiisocyanat, Perhydro-2,4'- und 4,4'-diphenylmethandiisocyanat und Lackpolyisocyanate auf Hexamethylendiisocyanat und/oder Isophorondiisocyanatbasis. Ebenfalls geeignet sind Gemische der genannten und auch anderer Polyisocyanate.

Bei der Komponente e) handelt es sich um Polycarbonatpolyole der bereits oben unter a₆) beschriebenen Art. Im allgemeinen ist die Menge der eingesetzten Komponente e) immer kleiner als die Menge der Komponente a) und außerdem die Menge an Komponente a₆) immer kleiner als die Summe der Komponenten a₁) bis a₅). Die Gesamtmenge der eingesetzten Ausgangskomponenten a₆) und e) muß jedoch den oben gemachten Ausführungen bezüglich des Gehalts der erfindungsgemäßen Polyesterpolyole an Carbonatgruppen entsprechen.

Geeignete Lösungsmittel zur Herstellung der Polyester-Polyurethan-Polycarbonatharze sind z.B. N-Methylpyrrolidon, Diethylenglykoldimethylether, Methylethylketon, Methylisobutylketon, Aceton, Xylol, Toluol, Butylacetat bzw. Gemische dieser oder anderer Lösemittel. Die verwendeten organischen Lösemittel können vor, während oder nach dem Dispergierschritt ganz oder teilweise, gegebenenfalls azeotrop und/oder durch Anlegen eines Vakuums bzw. eines verstärkten Inertgasstromes aus dem Reaktionsgemisch entfernt werden.

Geeignete Katalysatoren für die Urethanisierungsreaktion können z.B. sein: Triethylamin, Zinn-II-octoat, Dibutylzinnoxid, Dibutylzinndilaurat und andere gebräuchliche Katalysatoren.

Vor oder während des Dispergierschrittes werden durch Zugabe von mindestens einer Base 25 bis 100, vorzugsweise 45 bis 100 % der eingebauten Säuregruppe in Salzgruppen überführt. Oftmals ist auch ein Überschuß der Base zweckmäßig, um so gewisse Eigenschaften, beispielsweise die Pigmentverträglichkeit der in Wasser dispergierten Polyesterpolyole zu verbessern.

Geeignete Basen können z.B. sein: Ammoniak, N-Methylmorpholin, Triethylamin, Dimethylethanolamin, Methyldiethanolamin, Triethanolamin, Morpholin, Tripropylamin, Ethanolamin, Triisopropanolamin, 2-Amino-2-methyl-1-propanol bzw. Gemische dieser und anderer Neutralisationsmittel. Ebenfalls geeignet, jedoch weniger bevorzugt als Neutralisationsmittel sind Natriumhydroxid, Lithiumhydroxid und Kaliumhydroxid. Bevorzugte Neutralisationsmittel sind Ammoniak, Dimethylethanolamin und Methyldiethanolamin.

Nach der Urethanisierungsreaktion können zur Erzielung bestimmter Eigenschaften auch geringe Mengen weiterer organischer Lösemittel, wie z.B. Ethanol, Propanol, Butanol, Butylglykol, Hexanol, Octanol, Butyldiglykol, Ethyldiglykol, Methyldiglykol und Methoxypropanol zugesetzt werden.

Im Dispergierschritt kann alternativ das Wasser/Neutralisationsmittelgemisch zum Harz, das Wasser zum Harz-/Neutralisationsmittelgemisch, das Harz zum Wasser/Neutralisationsmittelgemisch oder das Harz-/Neutralisationsmittelgemisch zum Wasser gegeben werden. Die Dispergierbarkeit der Harze in Wasser kann gewünschtenfalls durch Mitverwendung von externen Emulgatoren, wie z.B. ethoxyliertes Nonylphenol beim Dispergieren verbessert werden.

Der Dispergierschritt wird üblicherweise bei 40 bis 100°C durchgeführt. Die wässrigen Dispersionen der erfindungsgemäßen Polyesterpolyole weisen im allgemeinen die bereits oben genannten Festkörpergehalte auf. Der Anteil an organischen Lösungsmitteln liegt im allgemeinen unter 10, vorzugsweise unter 6 und besonders bevorzugt unter 4 Gew.-%.

Bei den erfindungsgemäßen Bindemittelkombinationen handelt es sich um Kombinationen aus A) erfindungsgemäßen Polyesterpolyolen und B) Vernetzerharzen in den oben angegebenen Mengenverhältnissen. Bei der erfindungsgemäßen Verwendung der erfindungsgemäßen Polyesterpolyole als Bindemittelkomponente für Beschichtungsmittel oder Dichtmassen kommen insbesondere derartige Bindemittelkombinationen zum Einsatz.

Geeignete Vernetzerharze B) sind Aminoplastharze, sowie Polyisocyanate mit blockierten oder freien Isocyanatgruppen bzw. beliebige Gemische derartiger Vernetzerharze.

Geeignete Aminoplastharze sind beispielsweise wasserverdünnbare bzw. -dispergiertbare Melamin- bzw. Harnstoff-Formaldehyd-Kondensationsprodukte, wie sie z.B. bei D.H. Solomon, The Chemistry of Organic Filmformers, S. 235 ff, John Wiley & Sons, Inc., New York, 1967, beschrieben sind. Die Melaminharze können jedoch auch ganz oder teilweise durch andere vernetzende Aminoplaste, wie sie z.B. in "Methoden der organischen Chemie" (Houben-Weyl), Bd. 14/2, Teil 2 4. Auflage, Georg Thieme Verlag, Stuttgart 1963, S. 319 ff, beschrieben sind, ersetzt werden.

Ebenfalls geeignete Vernetzerharze sind blockierte Polyisocyanate, beispielsweise auf Basis von Isophorondiisocyanat, Hexamethylendiisocyanat, 1,4-Diisocyanatcyclohexan, Bis-(4-isocyanato-cyclohexyl)-methan, 1,3-Diisocyanatobenzol, 1,4-Diisocyanatobenzol, 2,4-Diixocyanato-1-methylbenzol, 1,3-Diisocyanato-2-methylbenzol, 1,3-Bisisocyanatomethylbenzol, 2,4-Bisisocyanatomethyl-1,5-dimethylbenzo, Bis-(4-isocyanatophenyl)-propan, )-propan, Tris-(4-isocyanatophenyl)-methan, Trimethyl-1,6-diisocyanatohexan oder blockierte "Lackpolyisocyanate" wie Biuretgruppen aufweisende Polyisocyanate auf Basis von 1,6-Diisocyanatohexan, Isocyanuratgruppen aufweisende Polyisocyanate auf Basis von 1,6-Diisocyanatohexan oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartiger Polyhydroxylverbindungen andererseits, jeweils mit blockierten Isocyanatgruppen.

Ebenfalls geeignet sind z.B. durch Salzgruppen oder Polyetherstrukturen hydrophilierte, blockierte Polyisocyanate.

Geeignete Blockierungsmittel für diese Polyisocyanate sind beispielsweise einwertige Alkohole wie Methanol, Ethanol, Butanol, Hexanol, Benzylalkohol, Oxime wie Acetoxim, Methylethylketoxim, Lactame wie ε-Caprolactam, Phenole oder CH-acide Verbindungen wie z.B. Diethylmalonat.

Als freie Isocyanatgruppen enthaltende Polyisocyanatvernetzer B) sind beispielsweise organische Polyisocyanate mit aliphatisch, cycloaliphatisch, araliphatisch und/oder aromatisch gebundenen, freien Isocyanatgruppen, die bei Raumtemperatur flüssig sind, geeignet. Solche Polyisocyanatvernetzer B) weisen im allgemeinen eine Viskosität von 50 bis 10 000, vorzugsweise von 50 bis 1 500 mPa.s auf. Besonders bevorzugt handelt es sich bei der Polyisocyanatkomponente B) um Polyisocyanate oder Polyisocyanatgemisch mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23°C von 50 bis 1 500 mPa.s.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken.

Sehr gut geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder Vis(isocyanatocyclohexyl)-methan. Unter "Lackpolyisocyanaten" auf Basis dieser Diisocyanate sind die an sich bekannten Biuret-, Urethan-, Uretdion- undloder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger 0,5 Gew.-% befreit worden sind. Zu den bevorzugten, erfindungsgemäß zu verwendenden, aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N',N"-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen aus N,N',N"-Tris-(6-isocyanatohexyl)-isocyanurat im Gemisch mit untergeordneten Mengen an seinen höheren Homologen bestehen.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen.

Ebenfalls geeignet Polyisocyanatvernetzer sind solche, die durch den Einbau von Polyether- und/oder Salzgruppen hydrophiliert sind.

Erfindungsgemäße Bindemittelkombinationen, die Melaminharze oder blockierte Polyisocyanate als Vernetzerharze enthalten bzw. Beschichtungsmittel oder Dichtmassen auf Basis derartiger Bindemittelkombinationen, stellen Hitze-vernetzbare Einkomponenten-Systeme dar, die bei Raumtemperatur lagerfähig sind. Entsprechende Systeme, die als Vernetzer Polyisocyanate mit freien Isocyanatgruppen enthalten, stellen Zweikomponenten-Systeme dar, die durch Abmischung der Einzelkomponenten erhalten werden und bei Raumtemperatur eine nur begrenzte Topfzeit aufweisen.

Zur Herstellung von erfindungsgemäßen Bindemittelkombinationen in in Wasser dispergierter Form werden im allgemeinen wäßrige Dispersionen der erfindungsgemäßen Polyesterpolyole A) mit der Vernetzerkomponente B), die gegebenenfalls in einem inerten Lösungsmittel gelöst oder ebenfalls in Wasser gelöst bzw. dispergiert sein kann, vermischt, wobei die Polyesterpolyole A) die Funktion eines Emulgators für zugesetzte, für sich allein nicht wasserdispergierbare Vernetzerharze B) übernehmen kann. Diese Funktion kann auch durch Mitverwendung externer Emulgatoren unterstützt werden.

Vor der Zugabe der Vernetzerkomponente B) können der Komponente A) die üblichen Hilfs- und Zusatzmittel der Lacktechnologie einverleibt werden. Hierzu gehören beispielsweise Entschäumungsmittel, Verdickungsmittel, Verlaufshilfsmittel, Pigmente, Dispergierhilfsmittel für die Pigmentverteilung und dergleichen.

Die Herstellung von Beschichtungsmitteln, die als Bindemittel erfindungsgemäße, wäßrige Bindemittelkombinationen enthalten, erfolgt somit vorzugsweise in einem mehrstufigen Verfahren, wobei man in einem ersten Reaktionsschritt ein erfindungsgemäßes Polyesterpolyol mit den oben genannten Kenndaten durch Umsetzung bei 40 bis 140°C, gegebenenfalls in Gegenwart von bis zu 60 Gew.-%, bezogen auf das Gesamtgewicht des Reaktionsgemisches an inerten Lösungsmitteln, durch Umsetzung von Ausgangsmaterialien a) bis e) der obengenannten Art in den obengenannten Mengenverhältnissen herstellt, anschließend in einem zweiten Reaktionsschritt das so erhaltene Harz in Wasser löst bzw, dispergiert, wobei vor und/oder während dieses Schrittes 25 bis 100 % der Säuregruppen durch Neutralisation in Salzgruppen überführt werden und man schließlich in einem dritten Reaktionsschritt, gegebenenfalls nach Zusatz von Hilfs- und Zusatzmitteln die Vernetzerkomponente in der so erhaltenen wäßrigen Dispersion des erfindungsgemäßen Polyesterpolyols dispergiert bzw. löst.

In den erfindungsgemäßen Beschichtungsmitteln und Dichtmassen liegen die erfindungsgemäßen Polyesterpolyole als wesentliche Bindemittelkomponente vor. Außerdem können jedoch neben den erfindungsgemäßen Polyesterpolyolen A) und den Vernetzerharzen B) gegebenenfalls noch weitere hydroxyfunktionelle Lackharze C) vorliegen, deren Menge, bezogen auf Festkörper, bis zu 500, vorzugsweise bis zu 250 Gew.-% der Menge der Komponente A) betragen kann.

Gegebenenfalls mitverwendete, hydroxyfunktionelle Lackharze C) sind beispielsweise wasserverdünnbare, nichtionische oder anionische Bindemittel des Standes der Technik auf Polyepoxid-, Polyester-, Polyurethan-, Polyether-, Polyamin-, Polyolefin-, Polydien- undloder Polyacrylatbasis, wobei jeweils durch eine Vorprüfung die Verträglichkeit ermittelt werden muß.

Zu den bevorzugten Anwendungsgebieten für die erfindungsgemäßen Polyesterpolyole gehört ihre Verwendung als Bindemittelkomponente in klaren Decklacken, wie sie bei der Automobillackierung verwendet und vorzugsweise durch Einbrennen gehärtet werden. Die erfindungsgemäßen Polyesterpolyole eignen sich jedoch auch als Bindemittelkomponente für wäßrige Kunststoff-, Folien-, Metall- oder Holzlacke, sowie als Bindemittelkomponente für Grundlacke für mineralische Substrate. Auch die Herstellung von festkörperreichen Einschichtdecklacken unter Verwendung der erfindungsgemäßen Polyesterpolyole als Bindemittelkomponente ist möglich. Die erfindungsgemäßen Polyesterpolyole bzw. die erfindungsgemäßen Bindemittelkombinationen eignen sich auch zur Herstellung von lösungsmittelarmen Dichtmassen, sowie zur Herstellung von Klebstoffen.

### Beispiele

### Beispiel 1

In einen 15-l-Reaktionskessel mit Rühr-, Kühl-, Heizvorrichtung und Wasserabscheider werden 2 362 g (17,8 Gew.-%) Trimethylolpropan, 5 067 g (38,1 Gew.-%) Hexahydrophthalsäureanhydrid, 2 322 g (17,5 Gew.-%) Neopentylglykol, 1 152 g (8,7 Gew.-%) Maleinsäureanhydrid, 1 387 g (10,4 Gew.-%) Hexandiol-1,6 und 1 015 g (7,5 Gew.-%) 1,4-Cyclohexandimethanol bei 220°C verestert, bis die OH-Zahl 195 beträgt.

580 g dieses Polyesters, 250 g eines endständige Hydroxylgruppen aufweisenden, linearen Poly-1,6-hexandiolcarbonat der OH-Zahl 56, 40 g Dimethylolpropionsäure und 0,7 g Dibutylzinndilaurat werden in 75 g N-Methylpyrrolidon (NMP) bei 80°C gelöst und dann mit 130 g Isophorondiisocyanat unter Ausnutzen der Exothermie bei 130°C umgesetzt. Wenn keine NCO-Gruppen mehr nachweisbar sind, werden bei 80°C 11,4 g Dimethylethanolamin und 1 090 g Wasser zugegeben. Man erhält die wäßrige, homogene und stabile Polyesterpolyol-Dispersion 1) mit einem Festkörpergehalt von ca. 46 % und einem Anteil an organischen Lösemitteln von ca. 3,5 %.

### Kenndaten des dispergierten Polyesterpolyols:

(hier und nachstehend beziehen sich die Zahlen bezüglich der Säure- und OH-Zahlen auf auf- bzw, abgerundete Meßwerte und die Zahlen bezüglich des Urethan- bzw. Carbonatgruppengehalts auf auf- bzw. abgerundete, errechnete Werte)
Säurezahl (mg KOH/g): 20
OH-Zahl (mg KOH/g): 100
Urethangruppengehalt (-NHCOO-, %): 7
Carbonatgruppen (-OCOO-, %): 10

### Beispiel 2

In einem 15 l-Reaktionsgefäß mit Rühr-, Kühl-, Heizvorrichtung und Wasserabscheider werden 2 330 g (17,3 Gew.-%) Trimethylolpropan, 4 165 g (31,0 Gew.-%) Hexahydrophthalsäureanhydrid, 1 909 g (14,2 Gew.-%) Neopentylglykol, 1 410 g (10,5 Gew.-%) Adipinsäure, 1 140 g (8,5 Gew.-%) Hexandiol-1,6, 834 g (6,2 Gew.-%) 1,4 Cyclohexandimethanol und 1 652 g (12,3 Gew.-%) einer gesättigten Monocarbonsäure (®Prifrac 2980, Unichema) bei 220°C verestert, bis die Säurezahl ≤ 3 und die OH-Zahl 180 ist.

610 g dieses Polyesters, 200 g des in Beispiel 1 beschriebenen Polycarbonatdiols, 40 g Dimethylolpropionsäure und 1 g Dibutylzinnoxid werden in 75,3 g NMP gelöst und bei 80°C mit 150 g Isophorondiisocyanat umgesetzt. Die Reaktion wird bei 130°C so lange durchgeführt, bis keine NCO-Gruppen mehr nachweisebar sind. Nach Abkühlen auf 100°C werden 21,0 g Dimethylethanolamin und 1 120 g Wasser zugegeben. Man erhält die homogene, stabile, wäßrige Polyesterpolyol-Dispersion 2), als ca. 45%ige Lösung und einen Gehalt an organischen Lösemitteln von ca. 3,4 %.

### Kenndaten des dispergierten Polyesterpolyols:

Säurezahl (mg KOH/g): 19
OH-Zahl (mg KOH/g): 79
Urethangruppengehalt (-NHCOO-, %): 8
Carbonatgruppen (-OCOO-, %): 8

### Beispiel 3

In einem 15 l-Reaktionskessel mit Rühr-, Kühl-, Heizvorrichtung und Wasserabscheider werden 2 297 g (17,0 Gew.-% Trimethylolpropan, 4 928 g (36,6 Gew.-%) Hexahydrophthalsäureanhydrid, 2 258 g (16,7 Gew.-%) Neopentylglykol, 1 668 g (12,4 Gew.-%) Adipinsäure, 1 349 g (10,0 Gew.-%) Hexandiol-1,6 und 987 g (7,3 Gew.-%) 1,4-Cyclohexandimethanol eingewogen und bei 220°C verestert, bis die Säurezahl 3 erreicht ist. Der Polyester hat dann eine OH-Zahl von ca. 203.

610 g dieses Polyesters, 200 g des in Beispiel 1 beschriebenen Polycarbonatdiols, 40 g Dimethylolpropionsäure und 1,3 g Dibutylzinnoxid werden bei 80°C in 75 g N-Methylpyrrolidon gelöst und dann mit 150 g Isophorondiisocyanat so umgesetzt, daß keine freie NCO-Gruppe mehr nachweisbar ist. Nach Zugabe von 20,6 g Dimethylethanolamin wird das Polymer in 1 175 g Wasser dispergiert, Man erhält die homogene, stabile Polyesterpolyol-Dispersion 3) mit ca. 44 % Festkörpergehalt und ca. 3,3 % organischen Hilfslösemitteln.

### Kenndaten des dispergierten Polyesterpolyols:

Säurezahl (mg KOH/g): 19
OH-Zahl (mg KOH/g): 90
Urethangruppengehalt (-NHCOO-, %): 8
Carbonatgruppen (-OCOO-, %): 8

### Beispiel 4

Die in den Beispielen 1 bis 3 beschriebenen Polyesterpolyol-Dispersionen werden mit einem Aminovernetzerharz zu Klarlacken formuliert, durch Verdünnen mit destilliertem Wasser auf Spritzviskosität (ca. 20 bis 25 Sekunden Auslaufviskosität im DIN-4-Becher, 23°C) eingestellt, und im Vergleich zu einem analogen Lack auf Basis der "Acrylatdispersion 1" gemäß EP-A 0 455 028 durch Spritzen auf mit KTL-Wasserfüller (40 µm) und Wasserbasislack (Silber, 15 µm) beschichteten Stahlblechen appliziert. Nach Vortrocknung von 10 Minuten 60°C und 5 Minuten 90°C werden die Klarlacke für 20 Minuten bei 140°C ausgehärtet.

Folgende Formulierung wurde verwendet:

| Klarlacke | A) | B) | C) | D) |
|---|---|---|---|---|
| Dispersion 1 | 100 g | | | |
| Dispersion 2 | | 100 g | | |
| Dispersion 3 | | | 100 g | |
| Vergleich | | | | 100 g |
| | | | | |
| Melaminharz¹⁾ | 24,7 g | 24,1 g | 23,6 g | 24,1 g |
| Benetzungshilfsmittel²⁾ | 1 g | 1 g | 1 g | 2 g |
| Verlaufsmittel³⁾ | 1 g | 1 g | 1 g | 1 g |
| Lichtschutzmittel⁴⁾ | 4,2 g | 4,2 g | 4,2 g | 4,2 g |
| Verdicker⁵⁾ | | | | 2 g |
| Lösemittel⁶⁾ | 5,7 g | 9,2 g | 9,4 g | 5,7 g |

| | | | | |
|---|---|---|---|---|
| ¹⁾ Melaminharz: ®Cymel 325 (Cyanamid Int.), 80 %ig | | | | |
| ²⁾ Benetzungshilfmittel: Fluortensid FC 170 (Bayer AG), 10%ig in Wasser | | | | |
| ³⁾ Verlaufsmittel: ®Additol XW 395 (Hoechst AG), 50%ig in Butylglykol | | | | |
| ⁴⁾ Lichtschutzmittel: ®Tinuvin 1130 / ®Tinuvin 292 (Ciba-Geigy) = 2 : 1, 50%ig in NMP | | | | |
| ⁵⁾ Verdicker: ®Viscalex HV 30 (Allied Colloids GmbH) 4,17 % in Wasser/DMEA | | | | |
| ⁶⁾ Lösemittel: Klarlack A), B), C) = NMP Klarlack D) = Ethyldiglykol/NMP = 1 : 1 | | | | |

Folgende Ergebnisse wurden erhalten:

| Klarlack | A) | B) | C) | D) |
|---|---|---|---|---|
| Glanz 20° | 87 | 81 | 85 | 75 |
| DOI-Wert (Filmoptik | 80 | 80 | 80 | 60 |
| Verlauf | sehr gut | sehr gut | sehr gut | gut |
| Pendelhärte n. König (DIN 53 157) | 204 | 125 | 178 | 190 |
| Erichsentiefung (DIN 53156) | 6,0 | 8,5 | 7,5 | 5,5 |
| Überbrennfestigkeit nach VW VW (dE) ¹⁾ | 0,6 | 0,6 | 0,7 | 1,7 |
| Superbenzinfestigkeit (10 Minuten Belastung) ²⁾ | o.B. | o.B. | o.B. | o.B. |
| Chemikalienbeständigkeit (DB-Methode) ³⁾ | | | | |
| - Baumharz | > 72 | 38 | 44 | 40 |
| - Bremsflüssigkeit | 44 | 36 | 36 | 36 |
| - Pankreatin | 56 | 42 | 38 | 40 |
| - Natronlauge (1%ig) | 67 | > 75 | 69 | 47 |
| - Schwefelsäure (1%ig) | 43 | 44 | 44 | 36 |
| Schwitzwassertest 240 Stunden ⁴⁾ | 3* | 1 | 2* | 4 |
| Wasserfestigkeit (24 Stunden) ⁵⁾ | 0 | 0 | 0 | 0 |

| | | | | |
|---|---|---|---|---|
| 1) je niedriger der Wert, umso besser | | | | |
| 2) o.B. = ohne Befund | | | | |
| 3) angegeben ist jeweils die Temperatur in °C, bis zu der keine Beschädigung auftritt | | | | |
| 4) Bewertet wurde das Weißanlaufen auf Glasplatten, 0 = bester Wert, 5 = schlechtester Wert; * = Nach 1 bis 2 Stunden waren die Filme regeneriert. | | | | |
| 5) Ein mit Wasser getränkter Wattebausch wird auf die ausgehärteten Filme aufgelegt, 0 = ohne Befund. | | | | |

Die erfindungsgemäßen Lacke zeigen gegenüber dem Vergleich deutliche Vorteile in der gesamten Filmoptik, in der Uberbrennfestigkeit (Applikationssicherheit) und verhalten sich in der Chemikalienbeständigkeit vor allem gegen verd. Schwefelsäure ("Saurer Regen") günstiger.

### Beispiel 5

In einen 5-l-Reaktionskessel mit Rühr-, Kühl- und Heizvorrichtung und Wasserabscheider werden 877 g (18,0 Gew.-%) Trimethylolpropan, 637 g (13,0 Gew.-%) Adipinsäure, 942 g (19,3 Gew.-%) 1,4-Cyclohexandimethanol, 907 g (18,6 Gew.-%) Neopentylglykol, 641 g (13,1 Gew.-%) Maleinsäureanhydrid und 873 g (17,9 Gew.-%) Hexahydrophthalsäureanhydrid eingewogen, unter Inertgas auf 220°C aufgeheizt und so lange verestert, bis die Säurezahl ≤ 3 ist. Der Polyester hat dann eine OH-Zahl von 195.

780 g dieses Polyesters, 80 g des in Beispiel 1 beschriebenen Polycarbonatdiols, 40 g Dimethylolpropionsäure und 0,8 g Dibutylzinnoxid werden in 75 g N-Methylpyrrolidon gelöst und bei 90°C mit 100 g Isophorondiisocyanat umgesetzt. Unter Ausnutzung der Exothermie wird auf 130°C aufgeheizt und so lange gerührt, bis keine NCO-Gruppen mehr nachweisbar sind. Nach Zugabe von 22,8 g Dimethylethanolamin wird das Polymer in 1 400 g Wasser dispergiert. Man erhält eine stabile, homogene Polyesterpolyol-Dispersion 5) mit einem Festkörpergehalt von ca. 40 % und einem Anteil an organischem Lösemittel von ca. 3 %.

### Kenndaten des dispergierten Polyesterpolyols:

Säurezahl (mg KOH/g): 23
OH-Zahl (mg KOH/g): 150
Urethangruppengehalt (-NHCOO-, %): 5
Carbonatgruppen (-OCOO-, %): 3

Die Polyesterpolyol-Dispersion 5) wird mit einem handelsüblichen Melaminvernetzerharz ®Sacopal M 232 (Krems Chemie) im Gewichtsverhältnis 75 : 25, jeweils bezogen auf 100 % Festgehalt, abgemischt, mit Wasser auf einen Festkörpergehalt von ca. 45 % eingestellt und mit einem Filmzieher auf gereinigte Stahlbleche aufgezogen. Die Filme zeigten einen sehr guten Verlauf. Nach Ablüften für 15 Minuten bei Raumtemperatur wurden die Überzüge für 30 Minuten bei 150°C eingebrannt. Die so erhaltenen Klarlacke zeigten nach 10minütiger Belastung mit Superbenzin, bzw. nach einem Wischtest über 200 Doppelhübe mit einem mit MIBK-getränkten Wattebausch keine Erweichung. Ein Wassertest für 24 Stunden ergab ebenfalls keinen Befund.

### Beispiel 6

In einem 5-l-Reaktionsgefäß mit Rühr-, Kühl-, Heizvorrichtung und Wasserabscheider werden 258 g (5,8 Gew.-%) Sojaölfettsäure, 731 g (16,4 Gew.-%) Trimethylolpropan, 1 237 g (27,8 Gew.-%) Hexandiol-1,6, 307 g (6,9 Gew.-%) des in Beispiel 1 beschriebenen Polycarbonatdiols, 806 g (18,1 Gew.-%) Adipinsäure und 1 120 g (28,0 Gew.-%) Isophthalsäure eingewogen und bei 210°C verestert. Man erhält ein Polyester-Polycarbonat mit der OH-Zahl 181.

750 g dieses Polyester-Polycarbonats, 57,5 g Dimethylolpropionsäure und 2,5 g Dibutylzinnoxid werden in 149 g N-Methylpyrrolidon gelöst und bei 80°C mit 192,5 g Isophorondiisocyanat zur Reaktion gebracht. Die Reaktion wird bei 120°C zu Ende geführt. Wenn keine NCO-Gruppen mehr nachweisbar sind, werden bei 80°C 21,7 g Dimethylethanolamin und 1 050 g Wasser zugegeben. Man erhält eine stabile, homogene, wäßrige Polyesterpolyol-Dispersion 6) mit einem Festkörpergehalt von ca. 45 % und einem Gehalt an organischen Lösemitteln von ca. 6,7 %.

### Kenndaten des dispergierten Polyesterpolyols:

Säurezahl (mg KOH/g): 27
OH-Zahl (mg KOH/g): 80
Urethangruppengehalt (-NHCOO-, %): 10
Carbonatgruppen (-OCOO-, %): 9

100 g der Polyesterpolyol-Dispersion werden mit 100 g einer 40%igen, wäßrigen Lösung eines blockierten Polyisocyanatvernetzers gemischt und auf gereinigte Stahlbleche aufgetragen. Nach dem Einbrennen bei 165°C erhält man einen klaren, homogenen, glänzenden Klarlack mit sehr gutem Verlauf, der nach 48 Stunden Wasserbelastung sowie nach 15 Minuten Belastung mit Superbenzin keinen Befund zeigt.

Das hier verwendete blockierte Polyisocyanat ist ein handelsübliches, mit Butanonoxim blockiertes, wasserdispergierbares Polyisocyanat mit einem Gehalt an cycloaliphatisch gebundenen, blockierten Isocyanatgruppen (berechnet als NCO) von 4,4 % (®Bayhyrol-VP LS 2016 E, Hersteller: Bayer AG).

### Beispiel 7

In einem 5-l-Reaktionskessel mit Rühr-, Kühl-, Heizvorrichtung und Wasserabscheider werden 525 g (10,7 Gew.-%) Trimethylolpropan, 841 g (17,1 Gew.-%) Hexandiol-1,6, 1 283 g (26,1 Gew.-%) 1,4-Cyclohexandimethanol, 260 g (5,3 Gew.-%) Adipinsäure, 1 184 g (24,1 Gew.-%) Isophthalsäure und 823 g (16,7 Gew.-%) Phthalsäureanhydrid eingewogen und bei 220°C verestert, bis die Säurezahl 5,5 ist. Der Polyester hat dann eine OH-Zahl von 194.

750 g dieses Polyesters, 100 g des in Beispiel 1 beschriebenen Polycarbonatdiols, 15 g Pentaerythrit, 40 g Dimethylolpropionsäure und 1,3 g Dibutylzinnoxid werden bei 100 bis 120°C homogenisiert und dann bei 100°C mit 95 g Hexamethylendiisocyanat umgesetzt. Wenn keine freie NCO-Gruppe mehr nachweisbar ist, werden 30,7 g N-Methyldiethanolamin zugegeben und in 1 050 g Wasser dispergiert. Man erhält die stabile, homogene Polyesterpolyol-Dispersion 7) mit ca. 48 % Festkörpergehalt und ohne organische Lösemittel.

### Kenndaten des dispergierten Polyesterpolyols:

Säurezahl (mg KOH/g): 20
OH-Zahl (mg KOH/g): 145
Urethangruppengehalt (-NHCOO-, %): 7
Carbonatgruppen (-OCOO-, %): 4

100 g der Polyesterpolyol-Dispersion 7) werden mit 100 g des blockierten Polyisocyanatvernetzers aus Beispiel 6 abgemischt, mit 2 g N-Methylpyrrolidon, 0,5 g ®Additol XW 395 und 20 g Wasser versetzt und auf gereinigte Stahlbleche appliziert. Nach dem Aushärten bei 165°C erhält man einen sehr gut verlaufenen, glänzenden, zähelastischen Klarlack, der nach 15 Minuten Belastung mit Superbenzin bzw. 48 Stunden Belastung mit Wasser keinen Befund zeigt.

### Beispiel 8

In einem 5-l-Reaktionskessel mit Rühr-, Kühl-, Heizvorrichtung und Wasserabscheider werden 660 g (13,9 Gew.-%) Phthalsäureanhydrid, 1 200 g (25,2 Gew.-%) Pentaerythrit, 2 400 g (50,4 Gew.-%) Sojaölfettsäure und 500 g (10,5 Gew.-%) Benzoesäure eingewogen und bei 220°C verestert, bis die Säurezahl 2 beträgt. Der Polyester hat dann eine OH-Zahl von 176.

620 g dieses Polyesters, 150 g eines hydroxyfunktionellen Polycarbonats mit einem Molekulargewicht von ca. 1 200 und einer OH-Zahl von ca. 80, 10 g Neopentylglykol, 45 g Dimethylolpropionsäure und 1,2 g Dibutylzinnoxid werden bei 80°C in 111 g NMP gelöst. Nach Zugabe von 140 g Isophorondiisocyanat und 40 g Perhydrodiphenylmethandiisocyanat wird bei 125°C so lange gerührt, bis keine NCO-Gruppen mehr nachweisbar sind. Dann wird auf 90°C abgekühlt und in eine Mischung aus 15,7 g Triethylamin, 8 g 30 %igem Ammoniak und 2 250 g Wasser dispergiert. Man erhält die oxidativ trocknende, stabile Polyesterpolyol-Dispersion 8), mit einem Festkörpergehalt von ca. 30 %, und einem Anteil von ca. 3,3 % organischen Lösemitteln.

Das in diesem Beispiel eingesetzte hydroxyfunktionelle Polycarbonat wurde durch Umsetzung von Diphenylcarbonat mit einem Gemisch aus 1,6-Hexandiol, Trimethylolpropan und ®Ocenol 110/130 (handelsüblicher, ungesättigter Fettalkohol der Fa. Henkel) im Gewichtsverhältnis 67 : 11 : 22 hergestellt,

### Kenndaten des Polyesterpolyols:

Säurezahl (mg KOH/g): 20
OH-Zahl (mg KOH/g): 77
Urethangruppengehalt (-NHCOO-, %): 9
Carbonatgruppen (-OCOO-, %): 5

Die Polyesterpolyol-Dispersion 8) wird mit einer wäßrigen Sikkativdispersion auf Basis von Kobalt-II-oktoat (0,06 % Metall auf 100%igem Bindemittel), Zink-II-oktoat (0,2 % Metall auf 100%igem Bindemittel) und Zirkoniumoktoat (0,2 % Metall auf 100 % Bindemittel) versetzt, auf Glasplatten in einer Naßfilmdicke von 180 µm aufgetragen und bei Raumtemperatur 24 Stunden getrocknet. Man erhält einen glänzenden Film mit gutem Verlauf und guter Wasser- sowie Benzinfestigkeit.

### Beispiel 9

430 g des in Beispiel 1 beschriebenen Polyesters, 40 g Dimethylolpropionsäure und 400 g des in Beispiel 1 beschriebenen Polycarbonatdiols werden in 75 g N-Methylpyrrolidon gelöst, mit 1 g Dibutylzinnoxid versetzt und bei 90 bis 120°C mit 130 g Isophorondiisocyanat umgesetzt. Wenn keine NCO-Gruppe mehr nachweisbar ist, werden 20,4 g Dimethylethanolamin zugegeben und das Polymer in 1 030 g Wasser dispergiert. Man erhält die stabile, homogene Polyesterpolyol-Dispersion 9) mit einem Festkörpergehalt von ca. 47 % und einem Anteil an organischen Lösemitteln von ca. 3,5 %.

### Kenndaten des dispergierten Polyesterpolyols:

Säurezahl (mg KOH/g): 19
OH-Zahl (mg KOH/g): 75
Urethangruppengehalt (-NHCOO-, %): 7
Carbonatgruppen (-OCOO-, %): 16

213 g (0,14 Mol) der Polyesterpolyol-Dispersion 9) werden mit 51,0 (0,19 Mol) eines Biuretgruppen enthaltenden Polyisocyanats auf Basis von Hexamethylendiisocyanat mit einem NCO-Gehalt von 22 %, 5 g Butylglykol, 4 g Butylglykolacetat, 60 g Wasser und 1 g eines handelsüblichen Polyurethanverdickers (®Acrysol RM 8, Rohm und Haas) versetzt und durch Rühren homogenisiert. Man läßt 30 Minuten entschäumen. Dann werden Filme auf Holzbrettchen aufgezogen und bei Raumtemperatur getrocknet. Nach Aushärtung erhält man klare, vernetzte Überzüge mit sehr guter Lösemittelbeständigkeit (200 Hübe MIBK-Wischtest ohne Befund) und Wasserfestigkeit (24 Stunden Wasserbelastung mit feuchtem Wattebausch ohne Befund).

## Patentansprüche

1. Wasserverdünnbare, Urethangruppen aufweisende Polyesterpolyole, dadurch gekennzeichnet, daß sie zu 25 bis 100 % mit Basen neutralisierte, einer Säurezahl von 6 bis 45 mg KOH/g entsprechende Säuregruppen, eine Hydroxylzahl von 20 bis 250 mg KOH/g, ein Molekulargewicht Mw von 2 000 bis 150 000 und einen Urethangruppengehalt (-NH-CO-O-) von 2 bis 16 Gew.-% aufweisen und zumindest teilweise neutralisierte Umsetzungsprodukte darstellen von
a) 35 bis 90 Gew.-% eines verzweigten Polyesterpolyols mit einer Hydroxylzahl von 40 bis 600,
b) insgesamt 0,5 bis 8,5 Gew.-% mindestens einer Hydroxycarbonsäure,
c) insgesamt 0 bis 15 Gew.-% mindestens einer mindestens eine OH- und/oder NH- und/oder NH₂-Gruppe enthaltenden Verbindungen des Molekulargewichts 32 bis 500,
d) insgesamt 3 bis 33 Gew.-% mindestens einer mindestens difunktionellen Isocyanatkomponente des Molekulargewichts 168 bis 2 000 und
e) 0 bis 45 Gew.-% eines hydroxyfunktionellen Polycarbonats des Molekulargewichts 450 bis 16 000,
wobei das verzweigte Polyesterpolyol a) ein Kondensationsprodukt ist, aus
a₁) 0 bis 60 Gew.-% Monocarbonsäuren mit 6 bis 22 Kohlenstoffatomen,
a₂) 6 bis 65 Gew.-% Di- und/oder Tricarbonsäuren bzw. deren Anhydriden,
a₃) 10 bis 70 Gew.-% di- und/oder höherfunktionellen Alkoholen,
a₄) 0 bis 35 Gew.-% Monoalkoholen,
a₅) 0 bis 30 Gew.-% Hydroxycarbonsäuren, Aminocarbonsäuren, Lactonen, Lactamen und/oder Aminoalkoholen und
a₆) 0 bis 45 Gew.-% eines hydroxyfunktionellen Polycarbonats des Molekulargewichts 450 bis 16 000,
wobei sich die Prozentangaben zu a) bis e) sowie zu a₁) bis a₆) jeweils zu 100 % ergänzen,
mit der Maßgabe, daß die Polyole 1 bis 25 Gew.-% Carbonatgruppen (-O-CO-O-) in über die Aufbaukomponenten e) und/oder a₆) eingebauter Form enthalten.

2. Polyesterpolyole gemäß Anspruch 1, dadurch gekennzeichnet, daß sie zu 45 bis 100 % neutralisierte, einer Säurezahl von 9 bis 35 mg KOH/g entsprechende Säuregruppen, eine Hydroxylzahl von 35 bis 220 mg KOH/g, ein Molekulargewicht Mw von 3 500 bis 70 000 und einen Urethangruppengehalt von 3,5 bis 13,5 Gew.-% aufweisen und das zumindest teilweise neutralisierte Umsetzungsprodukt von
a) 41 bis 86 Gew.-% eines verzweigten Polyesterpolyols mit einer Hydroxylzahl von 50 bis 450 mg KOH/g,
b) 1,5 bis 7,0 Gew.-% einer 2,2-Bis(hydraxymethyl)alkancarbonsäure,
c) 0 bis 10 Gew.-% an mindestens eine OH- und/oder NH- und/oder NH₂-Gruppe enthaltenden Verbindungen des Molekulargewichts 32 bis 500,
d) 5 bis 26 Gew.-% mindestens einer mindestens difunktionellen Isocyanatkomponente des Molekulargewichts 168 bis 2 000 und
e) 5 bis 40 Gew.-% eines hydroxyfunktionellen Polycarbonats des Molekulargewichts 450 bis 16 000,
darstellen, wobei das verzweigte Polyesterpolyol a) ein Kondensationsprodukt ist aus
a₁) 0 bis 55 Gew.-% Monocarbonsäuren mit 7 bis 18 Kohlenstoffatomen,
a₂) 11 bis 58 Gew.-% Di- und/oder Tricarbonsäuren bzw. deren Anhydriden,
a₃) 17 bis 63 Gew.-% di- und/oder höherfunktionellen Alkoholen,
a₄) 0 bis 15 Gew.-% Monoalkoholen und
a₅) 0 bis 20 Gew.-% Hydroxycarbonsäuren, Aminocarbonsäuren, Lactonen, Lactamen und/oder Aminoalkoholen,
wobei sich die Prozentangaben zu a) bis e) sowie zu a₁) bis a₅) jeweils zu 100 % ergänzen.

3. Polyesterpolyole gemäß Anspruch 1, dadurch gekennzeichnet, daß sie zu 45 bis 100 % neutralisierte, einer Säurezahl von 9 bis 35 mg KOH/g entsprechende Säuregruppen, eine Hydroxylzahl von 35 bis 220 mg KOH/g, ein Molekulargewicht Mw von 3 500 bis 70 000 und einen Urethangruppengehalt von 3,5 bis 13,5 Gew.-% aufweisen und das zumindest teilweise neutralisierte Umsetzungsprodukt von
a) 41 bis 90 Gew.-% eines verzweigten Polyesterpolyols mit einer Hydroxylzahl von 50 bis 450 mg KOH/g Substanz,
b) 1,5 bis 7,0 Gew.-% einer 2,2-Bis(hydroxymethyl)alkancarbonsäure,
c) 0 bis 10 Gew.-% an mindestens eine OH- und/oder NH- und/oder NH₂-Gruppe enthaltenden Verbindungen des Molekulargewichts 32 bis 500 und
d) 5 bis 26 Gew.-% mindestens einer mindestens difunktioneller Isocyanatkomponente des Molekulargewichts 168 bis 2 000
darstellen, wobei das verzweigte Polyesterpolyol a) ein Kondensationsprodukt ist, aus
a₁) 0 bis 45 Gew.-% Monocarbonsäuren mit 7 bis 18 Kohlenstoffatomen,
a₂) 11 bis 55 Gew.-% Di- undloder Tricarbonsäuren bzw, deren Anhydriden,
a₃) 14 bis 60 Gew.-% Di- und/oder höherfunktionellen Alkoholen,
a₄) 0 bis 15 Gew.-X Monoalkoholen,
a₅) 0 bis 20 Gew.-% Hydroxycarbonsäuren, Aminocarbonsäuren, Lactonen, Lactamen und/oder Aminoalkoholen und
a₆) 5 bis 45 Gew.-% eines hydroxyfunktionellen Polycarbonats des Molekulargewichts 450 bis 6 000,
wobei sich die Prozentangaben zu a) bis d) sowie zu a₁) bis a₆) jeweils zu 100 % ergänzen.

4. Verfahren zur Herstellung von Polyesterpolyolen gemäß Anspruch 1 in in Wasser gelöster oder dispergierter Form, dadurch gekennzeichnet, daß man durch eine Polykondensationsreaktion aus den Komponenten a₁) bis a₆) einen gegebenenfalls Polycarbonatsegmente enthaltenden Polyester a) herstellt, diesen dann gegebenenfalls in einem organischen Lösemittel mit der Hydroxycarbonsäure b), gegebenenfalls einer Komponente c), der Isocyanatkomponente d) und gegebenenfalls der Polycarbonatkomponente e), gegebenenfalls unter Mitverwendung geeigneter Urethanisierungskatalysatoren so umsetzt, daß keine freien NCO-Gruppen mehr nachweisbar sind, anschließend ein Neutralisationsmittel hinzufügt, gleichzeitig oder anschließend in Wasser löst bzw. dispergiert und dann gegebenenfalls Lösemittel teilweise oder ganz destillativ entfernt, wobei über die Komponente a₆) und/oder die Komponente e) Polycarbonatsegmente in das Polymer in einer solchen Menge eingebaut werden, die einem Gehalt an Carbonatgruppen -O-CO-O- von 1 bis 25 Gew.-% entsprechen.

5. Wasserverdünnbare Bindemittelkombination, dadurch gekennzeichnet, daß sie
A) 30 bis 98 Gew.-% eines wasserverdünnbaren Polyesterpolyols gemäß Anspruch 1 bis 3 und
B) 2 bis 70 Gew.-% mindestens eines Vernetzerharzes
enthalten, wobei sich die Prozentangaben auf den Gesamtfestkörpergehalt A) und B) beziehen.

6. Wasserverdünnbare Bindemittelkombination gemäß Anspruch 5, dadurch gekennzeichnet, daß das Vernetzerharz B) aus einem Aminoplastharz besteht.

7. Wasserverdünnbare Bindemittelkombination gemäß Anspruch 5, dadurch gekennzeichnet, daß das Vernetzerharz B) aus einer Polyisocyanatkomponente mit blockierten Isocyanatgruppen besteht.

8. Wasserverdünnbare Bindemittelkombination gemäß Anspruch 5, dadurch gekennzeichnet, daß das Vernetzerharz B) aus einer Polyisocyanatkomponente mit freien Isocyanatgruppen besteht.

9. Verwendung der Polyesterpolyole gemäß Anspruch 1 bis 3, gegebenenfalls in Kombination mit anderen Hydroxylgruppen aufweisenden Lackharzen als Bindemittelkomponente in, gegebenenfalls die üblichen Hilfs- und Zusatzstoffe der Lacktechnologie enthaltenden, Beschichtungsmitteln oder Dichtmassen.

## Claims

1. Water dilutable polyesterpolyols containing urethane groups, characterised in that they have acid groups which are up to 25 to 100 % neutralised by bases, corresponding to an acid value of 6 to 45 mg KOH/g, a hydroxyl value of 20 to 250 mg KOH/g, a molecular weight Mw of 2 000 to 150 000 and a urethane group (-NH-CO-O-) content of 2 to 16 wt.% and represent at least partly neutralised reaction products of
a) 35 to 90 wt.% of a branched polyesterpolyol with a hydroxyl value of 40 to 600,
b) altogether 0.5 to 8.5 wt.% of at least one hydroxycarboxylic acid,
c) altogether 0 to 15 wt.% of at least one compound containing at least one OH and/or NH and/or NH₂ group, with a molecular weight of 32 to 500,
d) altogether 3 to 33 wt.% of at least one at least difunctional isocyanate component with a molecular weight of 168 to 2 000 and
e) 0 to 45 wt.% of a hydroxy-functional polycarbonate with a molecular weight of 450 to 16 000,
wherein the branched polyesterpolyol a) is a condensation product, made from
a₁) 0 to 60 wt.% of monocarboxylic acids with 6 to 22 carbon atoms,
a₂) 6 to 65 wt.% of di- and/or tricarboxylic acids or their anhydrides,
a₃) 10 to 70 wt.% of alcohols with two and/or more hydroxyl groups,
a₄) 0 to 35 wt.% of monoalcohols,
a₅) 0 to 30 wt.% of hydroxycarboxylic acids, aminocarboxylic acids, lactones, lactams and/or aminoalcohols and
a₆) 0 to 45 wt.% of a hydroxy-functional polycarbonate with a molecular weight of 450 to 16 000,
wherein the percentage data in a) to e) and a₁) to a₆) each add up to 100%,
with the proviso that the polyols contain 1 to 25 wt.% of carbonate groups (-O-CO-O-) in a form inserted via the structural components e) and/or a₆).

2. Polyesterpolyols according to Claim 1, characterised in that they have acid groups which are 45 to 100 % neutralised, corresponding to an acid value of 9 to 35 mg KOH/g, a hydroxyl value of 35 to 220 mg KOH/g, a molecular weight Mw of 3 500 to 70 000 and a urethane group content of 3.5 to 13.5 wt.% and which represent the at least partly neutralised reaction product of
a) 41 to 86 wt.% of a branched polyesterpolyol with a hydroxyl value of 50 to 450 mg KOH/g,
b) 1.5 to 7.0 wt.% of a 2,2-bis(hydroxymethyl)alkanoic acid,
c) 0 to 10 wt.% of compounds containing at least one OH and/or NH and/or NH₂ group, with a molecular weight of 32 to 500,
d) 5 to 26 wt.% of at least one at least difunctional isocyanate component with a molecular weight of 168 to 2 000 and
e) 5 to 40 wt.% of a hydroxy-functional polycarbonate with a molecular weight of 450 to 16 000,
wherein the branched polyesterpolyol a) is a condensation product made from
a₁) 0 to 55 wt.% of monocarboxylic acids with 7 to 18 carbon atoms,
a₂) 11 to 58 wt.% of di- and/or tricarboxylic acids or their anhydrides,
a₃) 17 to 63 wt.% of alcohols which contain two and/or more hydroxyl groups,
a₄) 0 to 15 wt.% of monoalcohols and
a₅) 0 to 20 wt.% of hydroxycarboxylic acids, aminocarboxylic acids, lactones, lactams and/or aminoalcohols,
wherein the percentage data in a) to e) and a₁) to a₅) each add up to 100%.

3. Polyesterpolyols according to Claim 1, characterised in that they have acid groups which are 45 to 100 % neutralised, corresponding to an acid value of 9 to 35 mg KOH/g, a hydroxyl value of 35 to 220 mg KOH/g, a molecular weight Mw of 3 500 to 70 000 and a urethane group content of 3.5 to 13.5 wt.% and which represent the at least partly neutralised reaction product of
a) 41 to 90 wt.% of a branched polyesterpolyol with a hydroxyl value of 50 to 450 mg KOH/g of substance,
b) 1.5 to 7.0 wt.% of a 2,2-bis(hydroxymethyl)alkanoic acid,
c) 0 to 10 wt.% of compounds containing at least one OH and/or NH and/or NH₂ group, with a molecular weight of 32 to 500, and
d) 5 to 26 wt.% of at least one at least difunctional isocyanate component with a molecular weight of 168 to 2 000
wherein the branched polyesterpolyol a) is a condensation product made from
a₁) 0 to 45 wt.% of monocarboxylic acids with 7 to 18 carbon atoms,
a₂) 11 to 55 wt.% of di- and/or tricarboxylic acids or their anhydrides,
a₃) 14 to 60 wt.% of alcohols which contain two and/or more hydroxyl groups,
a₄) 0 to 15 wt.% of monoalcohols,
a₄) 0 to 15 wt.% of monoalcohols,
a₅) 0 to 20 wt.% of hydroxycarboxylic acids, aminocarboxylic acids, lactones, lactams and/or aminoalcohols and
a₆) 5 to 45 wt.% of a hydroxy-functional polycarbonate with a molecular weight of 450 to 6 000,
wherein the percentage data in a) to d) and a₁) to a₆) each add up to 100%.

4. A process for the preparation of polyesterpolyols according to Claim 1 in a form which is dissolved or dispersed in water, characterised in that a polyester a) optionally containing polycarbonate segments is prepared from the components a₁) to a₆) by a polycondensation reaction, this is then reacted, optionally in an organic solvent, with the hydroxycarboxylic acid b), optionally a component c), the isocyanate component d) and optionally the polycarbonate component e), optionally with the joint use of suitable urethanisation catalysts, until free NCO groups are no longer detectable, then a neutralising agent is added, at the same time or subsequently the polymer is dissolved or dispersed in water and then optionally the solvent is partly or completely removed by distillation, wherein the polycarbonate segments are incorporated into the polymer via component a₆) and/or component e) in amounts such that they correspond to a carbonate group -O-CO-O- content of 1 to 25 wt.%.

5. Water-dilutable binder combinations, characterised in that they contain
A) 30 to 98 wt.% of a water-dilutable polyesterpolyol according to Claims 1 to 3 and
B) 2 to 70 wt.% of at least one cross-linking resin
wherein the percentage data refer to the total solids content of A) and B).

6. A water-dilutable binder combination according to Claim 5, characterised in that the cross-linking resin B) consists of an aminoplastic resin.

7. A water-dilutable binder combination according to Claim 5, characterised in that the cross-linking resin B) consists of a polyisocyanate component with blocked isocyanate groups.

8. A water-dilutable binder combination according to Claim 5, characterised in that the cross-linking resin B) consists of a polyisocyanate component with free isocyanate groups.

9. Use of polyesterpolyols according to Claims 1 to 3, optionally in combination with other lacquer resins which contain hydroxyl groups, as a binder component in coating agents or jointing compounds which optionally contain auxiliary substances and additives conventionally used in paint technology.

## Revendications

1. Polyesterpolyols diluables dans l'eau, présentant des groupes uréthane, caractérisés en ce qu'ils présentent des groupes acides neutralisés avec des bases à concurrence de 25 à 100%, correspondant à un indice d'acide de 6 à 45 mg de KOH/g, un indice d'hydroxyle de 20 à 250 mg de KOH/g, un poids moléculaire Mw de 2.000 à 150.000 et une teneur en groupes uréthane (-NH-CO-O-) de 2 à 16% en poids, et en ce qu'ils représentent des produits réactionnels au moins partiellement neutralisés comprenant
a) à concurrence de 35 à 90% en poids, un polyesterpolyol ramifié possédant un indice d'hydroxyle de 40 à 600,
b) au total, à concurrence de 0,5 à 8,5% en poids, au moins un acide hydroxycarboxylique,
c) au total, à concurrence de 0 à 15% en poids, au moins un composé possédant un poids moléculaire de 32 à 500, contenant au moins un groupe OH et/ou NH et/ou NH₂,
d) au total, à concurrence de 3 à 33% en poids, au moins un composant d'isocyanate au moins difonctionnel possédant un poids moléculaire de 168 à 2.000, et
e) à concurrence de 0 à 45% en poids, un polycarbonate hydroxyfonctionnel possédant un poids moléculaire de 450 à 16.000,
le polyesterpolyol ramifié a) représentant un produit de condensation constitué par
a₁) à concurrence de 0 à 60% en poids, des acides monocarboxyliques contenant de 6 à 22 atomes de carbone,
a₂) à concurrence de 6 à 65% en poids, des acides di- et/ou tricarboxyliques, respectivement leurs anhydrides,
a₃) à concurrence de 10 à 70% en poids, des alcools difonctionnels et/ou à fonctionnalité supérieure,
a₄) à concurrence de 0 à 35% en poids, des monoalcools,
a₅) à concurrence de 0 à 30% en poids, des acides hydroxycarboxyliques, des acides aminocarboxyliques, des lactones, des lactames et/ou des aminoalcools, et
a₆) à concurrence de 0 à 45% en poids, un polycarbonate hydroxyfonctionnel possédant un poids moléculaire de 450 à 16.000,
les indications en pour cent de a) à e), ainsi que de a₁) à a₆) se complétant respectivement pour donner 100%,
avec cette mesure que les polyols contiennent des groupes carbonate (-O-CO-O-) à concurrence de 1 à 25% en poids sous forme incorporée via les constituants e) et/ou a₆).

2. Polyesterpolyols selon la revendication 1, caractérisés en ce qu'ils présentent des groupes acides neutralisés à concurrence de 45 à 100%, correspondant à un indice d'acide de 9 à 35 mg de KOH/g, un indice d'hydroxyle de 35 à 220 mg de KOH/g, un poids moléculaire Mw de 3.500 à 70.000 et une teneur en groupes uréthane de 3,5 à 13,5% en poids, et en ce qu'ils représentent un produit réactionnel au moins partiellement neutralisé comprenant
a) à concurrence de 41 à 86% en poids, un polyesterpolyol ramifié possédant un indice d'hydroxyle de 50 à 450 mg de KOH/g,
b) à concurrence de 1,5 à 7,0% en poids, un acide 2,2-bis (hydroxyméthyl)alcanecarboxylique,
c) à concurrence de 0 à 10% en poids, des composés possédant un poids moléculaire de 32 à 500, contenant au moins un groupe OH et/ou NH et/ou NH₂,
d) à concurrence de 5 à 26% en poids, au moins un composant d'isocyanate au moins difonctionnel possédant un poids moléculaire de 168 à 2.000, et
e) à concurrence de 5 à 40% en poids, un polycarbonate hydroxyfonctionnel possédant un poids moléculaire de 450 à 16.000,
le polyesterpolyol ramifié a) représentant un produit de condensation constitué par
a₁) à concurrence de 0 à 55% en poids, des acides monocarboxyliques contenant de 7 à 18 atomes de carbone,
a₂) à concurrence de 11 à 58% en poids, des acides di- et/ou tricarboxyliques, respectivement leurs anhydrides,
a₃) à concurrence de 17 à 63% en poids, des alcools difonctionnels et/ou à fonctionnalité supérieure,
a₄) à concurrence de 0 à 15% en poids, des monoalcools, et
a₅) à concurrence de 0 à 20% en poids, des acides hydroxycarboxyliques, des acides aminocarboxyliques, des lactones, des lactames et/ou des aminoalcools, et
les indications en pour cent de a) à e), ainsi que de a₁) à a₅) se complétant respectivement pour donner 100%.

3. Polyesterpolyols selon la revendication 1, caractérisés en ce qu'ils présentent des groupes acides neutralisés à concurrence de 45 à 100%, correspondant à un indice d'acide de 9 à 35 mg de KOH/g, un indice d'hydroxyle de 35 à 220 mg de KOH/g, un poids moléculaire Mw de 3.500 à 70.000 et une teneur en groupes uréthane de 3,5 à 13,5% en poids, et en ce qu'ils représentent un produit réactionnel au moins partiellement neutralisé comprenant
a) à concurrence de 41 à 90% en poids, un polyesterpolyol ramifié possédant un indice d'hydroxyle de 50 à 450 mg de KOH/g de substance,
b) à concurrence de 1,5 à 7,0% en poids, un acide 2,2-bis (hydroxyméthyl)alcanecarboxylique,
c) à concurrence de 0 à 10% en poids, des composés possédant un poids moléculaire de 32 à 500, contenant au moins un groupe OH et/ou NH et/ou NH₂, et
d) à concurrence de 5 à 26% en poids, au moins un composant d'isocyanate au moins difonctionnel possédant un poids moléculaire de 168 à 2.000,
le polyesterpolyol ramifié a) représentant un produit de condensation constitué par
a₁) à concurrence de 0 à 45% en poids, des acides monocarboxyliques contenant de 7 à 18 atomes de carbone,
a₂) à concurrence de 11 à 55% en poids, des acides di- et/ou tricarboxyliques, respectivement leurs anhydrides,
a₃) à concurrence de 14 à 60% en poids, des alcools difonctionnels et/ou à fonctionnalité supérieure,
a₄) à concurrence de 0 à 15% en poids, des monoalcools,
a₅) à concurrence de 0 à 20% en poids, des acides hydroxycarboxyliques, des acides aminocarboxyliques, des lactones, des lactames et/ou des aminoalcools, et
a₆) à concurrence de 5 à 45% en poids, un polycarbonate hydroxyfonctionnel possédant un poids moléculaire de 450 à 6.000,
les indications en pour cent de a) à d), ainsi que de a₁) à a₆) se complétant respectivement pour donner 100%.

4. Procédé pour la préparation de polyesterpolyols selon la revendication 1, sous une forme dissoute ou dispersée dans l'eau, caractérisé en ce qu'on prépare, via une réaction de polycondensation, à partir des composants a₁) à a₆), un polyester a) contenant éventuellement des segments de polycarbonate, puis on le fait réagir éventuellement dans un solvant organique avec l'acide hydroxycarboxylique b), éventuellement un composant c), le composant d'isocyanate d) et éventuellement le composant de polycarbonate e), - éventuellement en utilisant de manière conjointe des catalyseurs d'uréthanisation approprié de telle sorte que l'on ne puisse plus détecter des groupes NCO libres, puis on y ajoute un agent de neutralisation, on dissout, respectivement on disperse dans de l'eau simultanément ou par la suite et on élimine alors éventuellement le solvant en partie ou complètement par distillation, en introduisant, via le composant a₆) et/ou le composant e), des segments de polycarbonate dans le polymère en une quantité telle qu'elle correspond à une teneur en groupes carbonate -O-CO-O- de 1 à 25% en poids.

5. Combinaison de liants diluable dans l'eau, caractérisé en ce qu'elle contient
A) à concurrence de 30 à 98% en poids, un polyesterpolyol diluable dans l'eau selon les revendications 1 à 3, et
B) à concurrence de 2 à 70% en poids, au moins une résine de réticulation,
les pour cent en poids se rapportant à la teneur totale en corps solides de A) et de B).

6. Combinaison de liants diluable dans l'eau selon la revendication 5, caractérisée en ce que la résine de réticulation B) est constituée d'une résine aminoplaste.

7. Combinaison de liants diluable dans l'eau selon la revendication 5, caractérisée en ce que la résine de réticulation B) est constituée par un composant de polyisocyanate contenant des groupes isocyanate bloqués.

8. Combinaison de liants diluable dans l'eau selon la revendication 5, caractérisée en ce que la résine de réticulation B) est constituée d'un composant de polyisocyanate contenant des groupes isocyanate libres.

9. Utilisation de polyesterpolyols selon les revendications 1 à 3, éventuellement en combinaison avec d'autres résines de laques, de vernis ou de peintures présentant des groupes hydroxyle, à titre de composant de liant, dans des agents d'enduction ou des matières d'étanchéification contenant éventuellement les adjuvants et les additifs habituels de la technologie des laques, des vernis ou des peintures.
